# EUROPEAN PATENT APPLICATION

(11) **EP 4 737 874 A1**
(43) Date of publication of application: **06.05.2026**
(21) Application number: 24835454.0
(22) Date of filing: 05.07.2024
(51) Int. Cl.: G01L 9/04, G01L 19/00, G01L 19/14

(54) **PRESSURE SENSOR**

(30) Priority: 06.07.2023 CN 202310821406; 15.04.2024 CN 202420773047 U
(71) Applicant: Churod Sensing Technologies (Suzhou) Co., Ltd, Suzhou, Jiangsu 215000 (CN)
(72) Inventor: XU, Wenqiang, Suzhou, Jiangsu 215000 (CN)
(74) Representative: Osterhoff, Utz
(86) International application number: PCT/CN2024/104042
(87) International publication number: WO 2025/007976

(57) **Abstract**

A pressure sensor (100), including: a sensing element (10) and a strain structure (30). A pressure inlet channel (11) is provided in the sensing element (10). One end of the sensing element (10) is provided with a pressure inlet port (12) communicated with the pressure inlet channel (11), a periphery of the sensing element (10) is provided with a sensing plane (13), and the strain structure (30) is provided on the sensing plane (13). The sensing element (10) is an integrally manufactured structure, a wall thickness of the sensing element (10) between the sensing plane (13) and an inner surface of the pressure inlet channel (11) is defined as W, and W is not less than 0.1 mm and not greater than 1.5 mm.

## Description

### CROSS-REFERENCE TO RELATED APPLICATIONS

This application claims priority to Chinese Patent Application No. 202310821406.5, filed on July 6, 2023, and Chinese Patent Application No. 202420773047.0, filed on April 15, 2024, the entire contents of which are incorporated herein by reference.

### TECHNICAL FIELD

The present application relates to the technical field of measuring fluid pressure, and in particular to a pressure sensor.

### BACKGROUND

At present, in order to reduce the space occupied by pressure sensors in hydraulic brake systems, most of the existing pressure sensors adopt lateral sensing elements to sense the pressure of the fluid in the hydraulic brake system. The brake fluid flows into the fluid channel inside the sensing element, and a strain gauge is set on the sensing surface on the outer peripheral side of the sensing element. The strain gauge can sense the pressure applied on the sensing membrane and transfer the pressure to a voltage signal, thereby monitoring the brake pressure in real time.

However, in the existing pressure sensors, the sensing elements are mostly split design. A processing hole is manufactured on a side of the sensing element away from the sensing surface, and the inner surface of the channel corresponding to the sensing surface of the fluid channel is processed through the processing hole to make the wall thickness of the sensing element at the sensing surface uniform, and then the sealing ball is welded to seal the processing hole to achieve the sealing of the fluid channel.

However, the production cost of the split sensing element is high, and the manufacturing process is more complicated due to the introduction of welding, and there is also a risk of welding leakage. During the welding process, the sensing element is easily affected by the welding process and senses welding stress, resulting in the output drift of the sensing element, affecting the sensing accuracy of the pressure sensor. During the operation of the pressure sensor, thermal stress is also easily generated due to the different materials and thermal expansion coefficients of the seal ball and the sensing element, further reducing the detection accuracy of the pressure sensor, and reducing the practicality and reliability of the pressure sensor.

### SUMMARY

The main purpose of the present application is to provide a pressure sensor, aiming to improve the structure of the sensing element of the pressure sensor and improve the detection accuracy and reliability of the pressure sensor.

In order to achieve the above purpose, the present application provides a pressure sensor, including: a sensing element and a strain structure. One end of the sensing element is provided with a pressure inlet port communicated with the pressure inlet channel, a periphery of the sensing element is provided with a sensing plane, and the strain structure is provided on the sensing plane. The sensing element is an integrally manufactured structure, a wall thickness of the sensing element between the sensing plane and an inner surface of the pressure inlet channel is defined as W, and W is not less than 0.1 mm and not greater than 0.6 mm.

In an embodiment, a cross-sectional shape of the pressure inlet channel at the sensing plane is circular, square or elliptical.

In an embodiment, the strain structure includes a pressure measuring strain gauge and an encapsulation glass, the pressure measuring strain gauge is attached to the sensing plane, and the encapsulation glass is connected to the sensing element and configured to cover the pressure measuring strain gauge.

In an embodiment, the pressure sensor is further provides with an integrated circuit unit, and the integrated circuit unit is provided at one end of the sensing element away from the pressure inlet port and is electrically connected to the strain structure.

In an embodiment, the pressure sensor is further provided with an installation housing, and a storage space is provided in the installation housing; the integrated circuit unit is provided in the storage space and is arranged along an extension direction of the storage space; the sensing element is connected to the installation housing and is at least partially provided in the storage space; and one end of the sensing element provided with the pressure inlet port is exposed on one side of the installation housing.

In an embodiment, the installation housing includes a housing body, a support frame and a connection terminal. The storage space is formed in the housing body, one end of the housing body is provided with an installation hole communicated with the storage space, the sensing element is plugged into the installation hole, and a portion of the sensing element provided with the sensing plane is provided in the storage space through the installation hole. The support frame is provided in the storage space and connected to the housing body, and the integrated circuit unit is installed at the support frame. The connection terminal is electrically connected to the integrated circuit unit and is partially exposed at one end of the housing body away from the installation hole.

In an embodiment, the support frame includes a support ring and a fixing frame. The support ring is connected to the housing body and abutted against an inner wall of the housing body, and the support ring surrounds a portion of the sensing element arranged in the storage space. The fixing frame is connected to the support ring, and the integrated circuit unit is installed at one side of the fixing frame.

In an embodiment, the connection terminal includes a terminal base and a terminal body. The terminal base is provided in the storage space, a first plug-in slot is provided at one end of the terminal base, a second plug-in slot is provided at another end of the terminal base, and an inner side wall of the first plug-in slot is communicated with an inner side wall of the second plug-in slot. One end of the terminal body is plugged into the second plug-in slot, and another end of the terminal body is exposed at the end of the housing body away from the installation hole. An end of the integrated circuit unit away from the sensing element is plugged into the first plug-in slot, and a portion of the integrated circuit unit arranged in the first plug-in slot is provided with a connection contact, and the connection contact is electrically abutted against the terminal body.

In an embodiment, the installation housing includes: a housing having an inner cavity; a cover body provided at one end of the housing, a first through hole is provided at the cover body; a spring provided in the first through hole, one end of the spring extends out of a top surface of the cover body; a conductive terminal located in the inner cavity of the housing, one end of the conductive terminal is abutted against another end of the spring; and a circuit board located in the inner cavity of the housing, one end of the circuit board is connected to another end of the conductive terminal.

In an embodiment, a top of the cover body is provided with a first plane and a second plane, the second plane is located on one side of the first plane, an arc-shaped transition is formed between the first plane and the second plane, a notch is formed between the first plane and the second plane, and the first through hole is located on the second plane.

In an embodiment, an aperture of the first through hole varies along an axial length of the first through hole, and the aperture of the first through hole is larger than an outer diameter of the spring.

In an embodiment, a bottom of the cover body is provided with a groove, a top of the circuit board is provided in the groove, a gap is provided between the top of the circuit board and a wall of the groove, a second through hole is provided on the circuit board, and another end of the conductive terminal is fixedly connected to the circuit board through the second through hole.

In an embodiment, a spring contact platform is provided on the conductive terminal, a bottom end of the spring is abutted against the spring contact platform, and the conductive terminal is inserted into an inner circle of the spring at one end close to the spring.

In an embodiment, a number of the first through hole, the spring, the second through hole, and the conductive terminal is multiple.

In technical solutions of the present application, the sensing element is integrally cast by a specific mold or integrally manufactured by turning, so that the sensing element can form an integral manufacturing structure, avoiding the separate processing of the sensing element, which is conducive to better reducing the production cost of the sensing element. The sensing element does not need to be welded, avoiding the problem of residual welding stress in the sensing element. At the same time, the sensing element with an integral structure can maintain the overall thermal expansion consistency, avoiding the residual thermal stress caused by different materials of the split sensing element, thereby effectively ensuring the structural stability and reliability of the sensing element and further improving the detection accuracy of the pressure sensor. Setting the wall thickness of the sensing element between the sensing plane and the inner surface of the pressure inlet channel between 0.1 mm and 0.6 mm is beneficial to ensuring that setting the strain structure within this wall thickness range can enable the strain structure to achieve more accurate detection effects on the sensing plane, prevent sensing errors between each detection position of the strain structure, and further ensure the detection accuracy of the pressure sensor. At the same time, within this range, it is also easier to produce and process the sensing element, further reducing the production and processing costs of the sensing element and improving the practicability and reliability of the pressure sensor.

### BRIEF DESCRIPTION OF THE DRAWINGS

In order to more clearly illustrate the technical solutions in the embodiments of the present application or the related art, the drawings required for the embodiments or the related art are briefly introduced below. Obviously, the drawings described below are some embodiments of the present application. For those of ordinary skill in the art, other drawings can be obtained based on the structures shown in these drawings without creative work.
FIG. 1 is a schematic structural view of a pressure sensor according to an embodiment of the present application.
FIG. 2 is a structural exploded view of an embodiment of the pressure sensor of FIG. 1.
FIG. 3 is a cross-sectional view of an embodiment of the pressure sensor of FIG. 1.
FIG. 4 is a schematic structural view of a sensing element of an embodiment of the pressure sensor of FIG. 1.
FIG. 5 is a cross-sectional view of an embodiment of the sensing element of FIG. 4.
FIG. 6 is a cross-sectional view at A-A in FIG. 5.
FIG. 7 is an exploded schematic view of the pressure sensor of the present application.
FIG. 8 is a schematic view of the overall structure of the pressure sensor of the present application.
FIG. 9 is a front cross-sectional view of the pressure sensor of the present application.
FIG. 10 is a partial enlarged view of FIG. 9.
FIG. 11 is a schematic view of a top view of a cover of the pressure sensor of the present application.
FIG. 12 is a schematic view of a bottom view of the cover of the pressure sensor of the present application.
FIG. 13 is a schematic structural view of some components of the pressure sensor of the present application.

### Description of reference signs

100, pressure sensor; 10, sensing element; 11, pressure inlet channel; 12, pressure inlet port; 13, sensing plane; 14, abutting edge; 15, first limiting protrusion; 16, second limiting protrusion; 30, strain structure; 50, integrated circuit unit; 70, installation housing; 71, housing body; 711, storage space; 713, installation hole; 715, fixing hole; 7151, limiting flange; 73, support frame; 731, support ring; 733, fixing frame; 75, connection terminal; 751, terminal base; 7511, first plug-in slot; 7513, second plug-in slot; 753, terminal body; 755, terminal cover; 7551, limiting through hole; 1, housing; 2, cover body; 21, first through hole; 22, first plane; 23, second plane; 24, notch; 25, groove; 3, spring; 4, conductive terminal; 41, spring contact platform; 5, circuit board; 51, second through hole.

The realization of the purpose, functional features and advantages of this application will be further explained in conjunction with embodiments and with reference to the accompanying drawings.

### DETAILED DESCRIPTION OF THE EMBODIMENTS

The technical solutions of the embodiments of the present application will be described in more detail below with reference to the accompanying drawings. It is obvious that the embodiments to be described are only some rather than all of the embodiments of the present application. All other embodiments obtained by persons skilled in the art based on the embodiments of the present application without creative efforts shall fall within the scope of the present application.

It should be noted that if there is a directional indication (such as up, down, left, right, front, rear...) in the embodiments of the present application, the directional indication is only used to explain the relative positional relationship, movement, etc. of the components in a certain posture (as shown in the drawings). If the specific posture changes, the directional indication will change accordingly.

In the present application, unless otherwise clearly specified and limited, the terms "connected", "fixed", etc. should be interpreted broadly. For example, "fixed" can be a fixed connection, a detachable connection, or a whole; can be a mechanical connection or an electrical connection; may be directly connected, or indirectly connected through an intermediate medium, and may be the internal communication between two elements or the interaction relationship between two elements, unless specifically defined otherwise. For those of ordinary skill in the art, the specific meaning of the above-mentioned terms in the present application can be understood according to specific circumstances.

It should be noted that, the descriptions associated with, e.g., "first" and "second," in the present application are merely for descriptive purposes, and cannot be understood as indicating or suggesting relative importance or impliedly indicating the number of the indicated technical feature. Therefore, the feature associated with "first" or "second" can expressly or impliedly include at least one such feature. Besides, the meaning of "and/or" appearing in the disclosure includes three parallel scenarios. For example, "A and/or B" includes only A, or only B, or both A and B. In addition, the technical solutions between the various embodiments can be combined with each other, but they must be based on the realization of those of ordinary skill in the art. When the combination of technical solutions is contradictory or cannot be achieved, it should be considered that such a combination of technical solutions does not exist, nor is it within the scope of the present application.

In the existing pressure sensors, the sensing elements are mostly split design. A processing hole is manufactured on a side of the sensing element away from the sensing surface, and the inner surface of the channel corresponding to the sensing surface of the fluid channel is processed through the processing hole to make the wall thickness of the sensing element at the sensing surface uniform, and then the sealing member is welded to seal the processing hole to achieve the sealing of the fluid channel. However, the production cost of the split sensing element is high, and the manufacturing process is more complicated due to the introduction of welding, and there is also a risk of welding leakage. During the welding process, the sensing element is easily affected by the welding process and senses welding stress, resulting in the output drift of the sensing element, affecting the sensing accuracy of the pressure sensor. During the operation of the pressure sensor, thermal stress is also easily generated due to the different materials and thermal expansion coefficients of the seal and the sensing element, further reducing the detection accuracy of the pressure sensor, and reducing the practicality and reliability of the pressure sensor. In view of the above problems, the present application provides a pressure sensor 100.

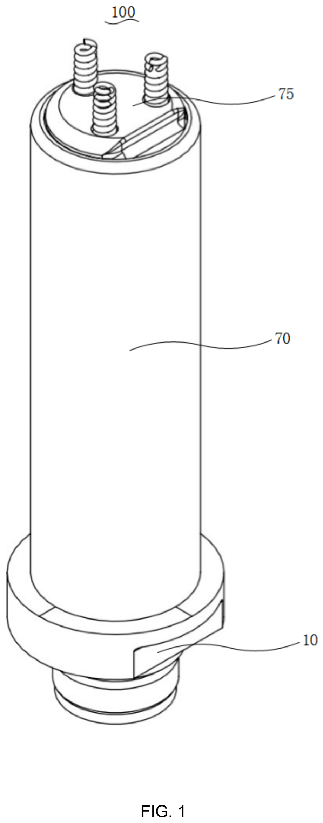

As shown in FIG. 1 to FIG. 6, in an embodiment of the present application, the pressure sensor 100 includes a sensing element 10 and a strain structure 30. A pressure inlet channel 11 is provided in the sensing element 10, one end of the sensing element 10 is provided with a pressure inlet port 12 communicated with the pressure inlet channel 11, and a sensing plane 13 is provided on a periphery of the sensing element 10. The strain structure 30 is provided on the sensing plane 13. The sensing element 10 is an integrally manufactured structure, a wall thickness of the sensing element 10 between the sensing plane 13 and an inner surface of the pressure inlet channel 11 is defined as W, and W is not less than 0.1 mm and not greater than 0.6 mm.

It can be understood that the pressure sensor 100 can communicate the pressurizing port of the sensing element 10 with the pipeline of the brake fluid, so that when the hydraulic brake system is started for braking operation, the brake fluid can be partially diverted to the pressure inlet channel 11, and the fluid pressure of the brake fluid acts on the inner wall of the pressure inlet channel 11. At this time, the part of the pressure inlet channel 11 corresponding to the sensing plane 13 can transmit the fluid pressure to the sensing plane 13, so that the sensing plane 13 is deformed under pressure, and then the strain structure 30 set on the sensing plane 13 can be affected by the deformation of the sensing plane 13, triggering the strain structure 30 to sense the pressure of the brake fluid transmitted to the sensing plane 13 through the sensing element 10, and the detected pressure signal is converted into an electrical signal and received by the controller of the hydraulic brake system, so that the user can monitor the brake fluid pressure in the hydraulic brake system in real time, and operate according to the monitored fluid pressure data, so as to ensure that the user can monitor the hydraulic brake system in real time, and further ensure the normal operation of the hydraulic brake system.

In an embodiment of the present application, the sensing element 10 can be manufactured by making a corresponding casting mold and using the casting mold for integral casting; or the sensing element 10 can be formed by integral turning of the integral material, so that the sensing element 10 can better form an integrally manufactured structure, effectively reducing the precision machining steps and welding steps of multiple components of the split sensing element 10, and reducing the production cost of the sensing element 10; and better avoiding the residual welding stress caused by poor welding technology and the thermal stress on the split sensing element caused by different thermal expansion coefficients of different materials, which is conducive to better ensuring the detection reliability and detection accuracy of the sensing element 10. According to the inner surface of the pressure inlet channel 11 corresponding to the processing sensing plane 13, the wall thickness of the sensing unit 10 between the sensing plane 13 and the inner surface of the pressure inlet channel 11 corresponding to the sensing plane 13 is controlled between 0.1 mm and 0.6 mm. Within this thickness range, the wall thickness of the sensing element 10 can be made not too small, which facilitates the production and processing of the sensing element 10, reduces the difficulty of production and processing of the sensing element 10, and enables the sensing element 10 to have a certain wall thickness at the sensing plane 13 to better bear the pressure of the fluid and produce deformation. At the same time, the wall thickness of the sensing element 10 at the sensing plane 13 is not too large, so that the sensing element 10 can better receive the fluid pressure to cause deformation to trigger the strain structure 30 to sense, and the wall thickness of the sensing element 10 within this range can be within the sensing error range of the strain structure 30, effectively reducing the detection error between each sensing position of the strain structure 30 on the sensing plane 13, ensuring the pressure sensing accuracy of the sensing element 10, and further improving the detection accuracy and reliability of the pressure sensor 100.

In the technical solutions of the present application, the sensing element 10 is integrally cast by a specific mold or integrally manufactured by turning, so that the sensing element 10 can form an integral manufacturing structure, avoiding the separate processing of the sensing element 10, which is conducive to better reducing the production cost of the sensing element 10. The sensing element 10 does not need to be welded, avoiding the problem of residual welding stress in the sensing element 10. At the same time, the sensing element 10 with an integral structure can maintain the overall thermal expansion consistency, avoiding the residual thermal stress caused by different materials of the split sensing element 10, thereby effectively ensuring the structural stability and reliability of the sensing element 10 and further improving the detection accuracy of the pressure sensor 100. Setting the wall thickness of the sensing element 10 between the sensing plane 13 and the inner surface of the pressure inlet channel 11 between 0.1 mm and 0.6 mm is beneficial to ensuring that setting the strain structure 30 within this wall thickness range can enable the strain structure 30 to achieve more accurate detection effects on the sensing plane 13, prevent sensing errors between each detection position of the strain structure 30, and further ensure the detection accuracy of the pressure sensor 100. At the same time, within this range, it is also easier to produce and process the sensing element 10, further reducing the production and processing costs of the sensing element 10 and improving the practicability and reliability of the pressure sensor 100.

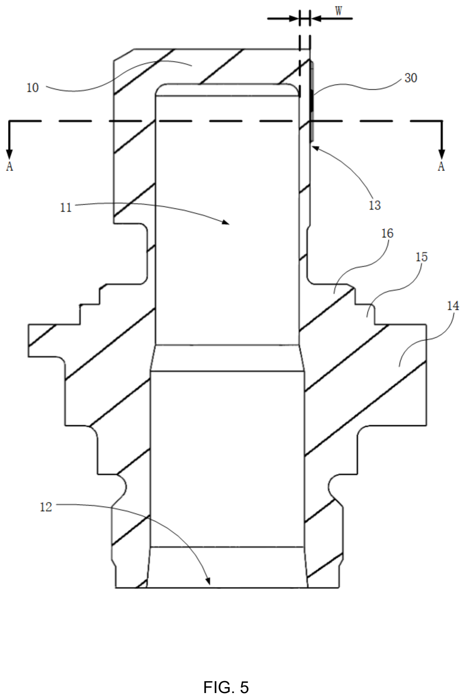

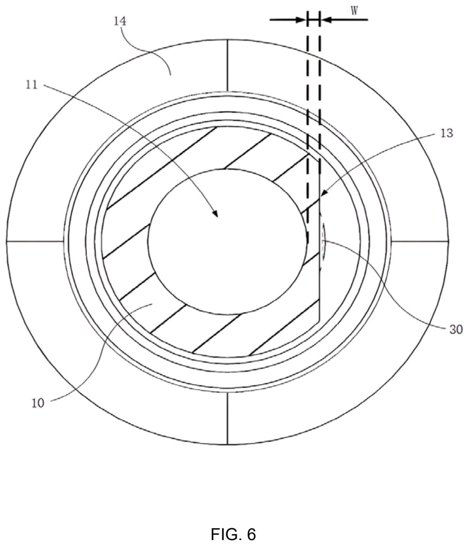

Further, as shown in FIG. 5 and FIG. 6, in an embodiment of the present application, a cross-sectional shape of the pressure inlet channel 11 at the sensing plane 13 is circular, square or elliptical.

In this embodiment, the cross-sectional shape of the pressure channel 11 at the sensing plane 13 can be a relatively regular shape such as a circle, a square or an ellipse. At this time, the regular pressure inlet channel 11 can make the pressure value of the sensing element 10 as a whole more uniform, which is conducive to better ensuring the sensing accuracy of the sensing element 10. When the cross-sectional shape of the pressure inlet channel 11 at the sensing plane 13 is circular, the inner diameter of the pressure inlet channel 11 can be designed to be larger, and the area of the sensing plane 13 can be set corresponding to the central axis position of the pressure inlet channel 11. At this time, the curvature of the inner surface of the pressure inlet channel 11 at the sensing plane 13 can be smaller, so that the wall thickness of the sensing element 10 can be better maintained between 0.1 mm and 0.6 mm, further ensuring the detection accuracy and reliability of the pressure sensor 100. Similarly, when the cross-sectional shape of the pressure inlet channel 11 at the sensing plane 13 is ellipse, the long side of the elliptical pressure inlet channel 11 can be set corresponding to the sensing plane 13, reducing the curvature of the inner surface of the pressure inlet channel 11 corresponding to the sensing plane 13, thereby ensuring the detection accuracy and reliability of the pressure sensor 100.

For a pressure sensor 100 with a larger range, the sensing element 10 needs to have a higher strength while ensuring a certain sensing sensitivity. According to the inner surface of the pressure inlet channel 11 corresponding to the processing sensing plane 13, the wall thickness range of the sensing element 10 between the sensing plane 13 and the inner surface of the sensing plane 13 corresponding to the pressure inlet channel 11 is controlled between 0.6 mm and 1.5 mm. Within this thickness range, the wall thickness of the sensing element 10 can be made not too small, so as to avoid the plastic deformation or even damage of the sensing element 10 under the maximum pressure, and at the same time, the wall thickness of the sensing element 10 at the sensing plane 13 can be made not too large, so that the sensing element 10 can trigger the strain structure 30 sensing sensitivity when the sensing fluid pressure is deformed. The wall thickness of the sensing element 10 within this range can be within the ideal sensing range of the strain structure 30, which can effectively reduce the detection error between each sensing position of the strain structure 30 on the sensing plane 13, ensure the pressure sensing accuracy of the sensing element 10, and further improve the detection accuracy and reliability of the pressure sensor 100.

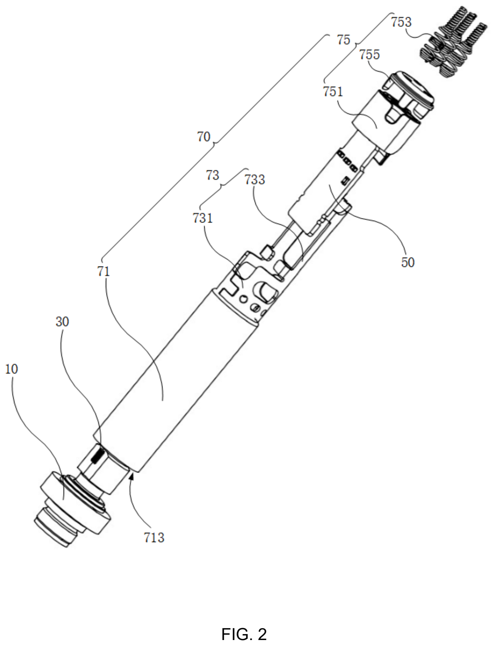

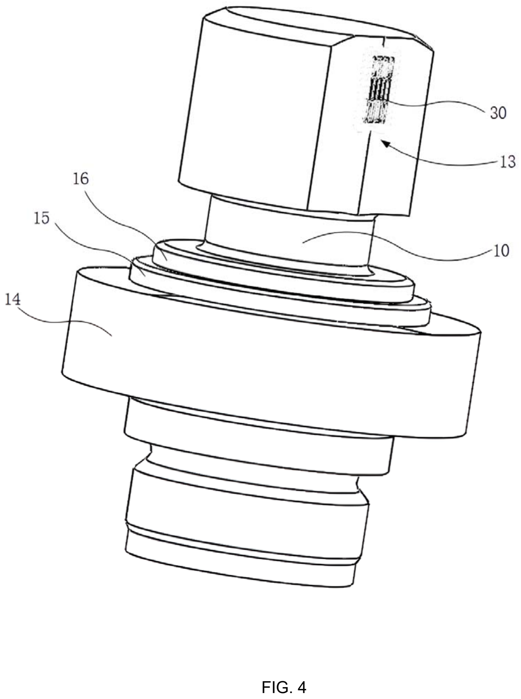

As shown in FIG. 2 and FIG. 4, in an embodiment of the present application, the strain structure 30 includes a pressure measuring strain gauge and an encapsulation glass, the pressure measuring strain gauge is attached to the sensing plane 13, and the encapsulation glass is connected to the sensing element 10 and configured to cover the pressure measuring strain gauge.

In this embodiment, the pressure measuring strain gauge can adopt a patch structure. By attaching the pressure measuring strain gauge to the sensing plane 13 and directly contacting the pressure exerted on the sensing plane 13 by the fluid in the pressure inlet channel 11, the pressure deformation of the sensing plane 13 can be used to trigger the pressure measuring strain gauge, so that the pressure sensing resistor of the pressure measuring strain gauge converts the pressure signal into an electrical signal and then by electrically connecting the pressure measuring strain gauge with the control system of the pressure sensor 100, the pressure value acting on the pressure measuring strain gauge can be analyzed by the strength of the electrical signal received by the pressure sensor 100, and then the pressure value of the fluid in the pressure inlet channel 11 of the sensing element 10 is fed back to realize the pressure measuring function of the pressure sensor 100. The pressure measuring strain gauge can be a full-bridge patch strain gauge or a half-bridge pressure measuring strain gauge. The user can select the corresponding pressure measuring strain gauge according to the actual pressure measurement requirements, so that the pressure sensor 100 meets the user's usage requirements. The pressure measuring strain gauge with a glass cover can be provided on the sensing element 10. The encapsulation glass can better cover and protect the pressure measuring strain gauge, reduce the influence of the pressure measuring strain gauge on the external environment, and further ensure the overall structural stability and reliability of the strain structure 30. The encapsulation glass can be directly cast to cover the pressure measuring strain gauge during the production and processing stage of the strain structure 30, so that the encapsulation glass and the pressure measuring strain gauge can better form a whole during production, which is convenient for the disassembly and maintenance of the pressure sensor 100.

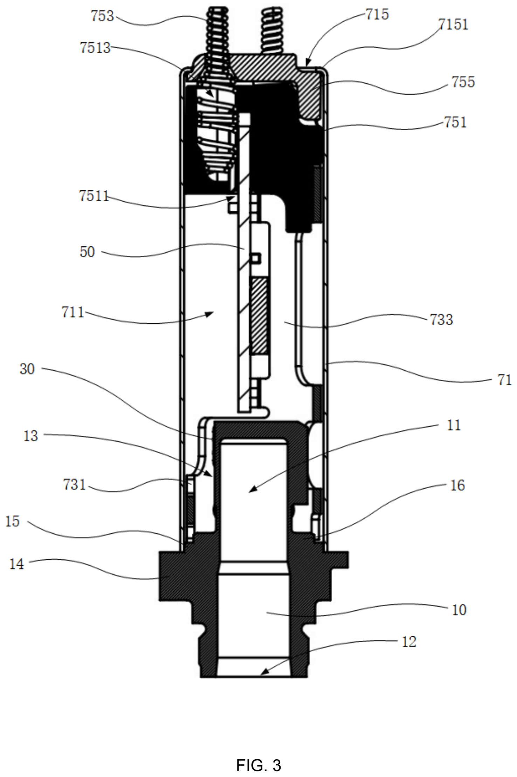

As shown in FIG. 2 and FIG. 3, in an embodiment of the present application, the pressure sensor 100 is further provided with an integrated circuit unit 50, the integrated circuit unit 50 is provided at one end of the sensing element 10 away from the pressure inlet port 12 and is electrically connected to the strain structure 30.

In this embodiment, the integrated circuit unit 50 integrating multiple components can be provided in the pressure sensor 100. By electrically connecting the integrated circuit unit 50 to the strain structure 30, the integrated circuit unit 50 can be used to better amplify, analyze, and process the electrical signal converted by the strain structure 30, so that the user can more clearly know the pressure value of the brake fluid through the pressure sensor 100, thereby ensuring the normal operation of the pressure sensor 100 and further improving the practicality and reliability of the pressure sensor 100. The integrated circuit unit 50 can not only integrate components for processing the electrical signals of the strain structure 30, but also integrate the control module of the pressure sensor 100, etc., so that the integrated circuit unit 50 can form the control center of the pressure sensor 100, and by setting a connection port connected to the integrated circuit unit 50 on the pressure sensor 100, the pressure sensor 100 can be connected to other terminal devices through the connection port of the integrated circuit unit 50, so that the pressure sensor 100 can also realize functions such as automatic programming input and data storage output, the pressure sensor 100 can better adapt to the needs of automated operations, enrich the functions of the pressure sensor 100, and further improve the practicality and structural reliability of the pressure sensor 100.

Further, as shown in FIG. 1 to FIG. 3, in an embodiment of the present application, the pressure sensor 100 is further provided with an installation housing 70, and a storage space 711 is provided in the installation housing 70. The integrated circuit unit 50 is provided in the storage space 711 and is arranged along an extension direction of the storage space 711. The sensing element 10 is connected to the installation housing 70 and is at least partially provided in the storage space 711, and one end of the sensing element 10 provided with the pressure inlet port 12 is exposed on one side of the installation housing 70.

In this embodiment, by disposing the integrated circuit unit 50 in the storage space 711 of the installation housing 70, the installation housing 70 can be utilized to better protect the integrated circuit unit 50, and by disposing the integrated circuit structure along the extension direction of the storage space 711, the integrated circuit unit 50 can be made more compact in the storage space 711, thereby facilitating reducing the impact of the integrated circuit unit 50 on the layout of components in the pressure sensor 100, thereby further improving the structural reliability and stability of the pressure sensor 100. The sensing element 10 can be installed on the installation housing 70, so that the portion of the sensing element 10 provided with the sensing plane 13 is arranged in the storage space 711. Or, the sensing element 10 can be installed as a whole in the storage space 711, and the pressure inlet port 12 of the sensing element 10 is exposed on one side of the installation housing 70 for the brake fluid to enter the pressure inlet channel 11, thereby ensuring the integrity of the pressure sensor 100. By setting at least the portion of the sensing element 10 provided with the sensing plane 13 in the installation housing 70, the installation housing 70 can be used to better cover and protect the sensing plane 13 and the strain structure 30 arranged on the sensing plane 13, which is conducive to preventing the strain structure 30 from being affected by external forces of the external environment, better ensuring the detection accuracy of the pressure sensor 100, and further improving the practicality and reliability of the pressure sensor 100.

Further, as shown in FIG. 2 and FIG. 3, in an embodiment of the present application, the installation housing 70 includes a housing body 71, a support frame 73 and a connection terminal 75. The storage space 711 is formed in the housing body 71, one end of the housing body 71 is provided with an installation hole 713 communicated with the storage space 711, the sensing element 10 is plugged into the installation hole 713, and a portion of the sensing element 10 provided with the sensing plane 13 is provided in the storage space 711 through the installation hole 713. The support frame 73 is provided in the storage space 711 and connected to the housing body 71, and the integrated circuit unit 50 is installed at the support frame 73. The connection terminal 75 is electrically connected to the integrated circuit unit 50 and is partially exposed at one end of the housing body 71 away from the installation hole 713.

In this embodiment, by setting a support frame 73 in the housing body 71, the integrated circuit unit 50 can be supported and fixed by the support frame 73 to prevent the integrated circuit unit 50 from being displaced or disconnected from the sensing element 10 during transportation or use of the pressure sensor 100, thereby further ensuring the connection stability and reliability between the integrated circuit unit 50 and the sensing element 10 and ensuring the normal operation and durability of the pressure sensor 100. The support frame 73 may be a support column or a limit structure integrally formed in the housing body 71, or a frame support structure embedded in the inner wall of the storage space 711. The connection terminal 75 may be a terminal structure plugged into the housing body 71 and extending into the storage space 711 to connect the integrated circuit unit 50, or a terminal structure preset in the storage space 711 and electrically connected to the integrated circuit unit 50 at one end, and exposed at one end of the housing body 71 to connect to the hydraulic brake system. At this time, by setting the connection terminal 75 to connect the integrated circuit unit 50, the connection terminal 75 can be used to directly contact the conductive contact on the control component of the hydraulic brake system on the outside of the housing body 71 to realize data transmission of the pressure sensor 100, reduce the cable connection in the hydraulic brake system, and further improve the convenience of disassembly and assembly of the hydraulic brake system.

An installation hole 713 communicated with the storage space 711 can be provided at the end of the housing body 71 away from the connection terminal 75. At this time, the installation hole 713 can be used for the sensing element 10 to pass through, so that the sensing unit 10 at least having the sensing plane 13 is disposed in the storage space 711 through the installation hole 713. By plugging and fixing a partial structure to the installation hole 713, the sensing element 10 can be firmly installed on the housing body 71, and the pressure inlet port 12 of the sensing element 10 is exposed at one end of the housing body 71, thereby making the overall structure of the pressure sensor 100 more compact and reliable, so that the housing body 71 can better cover and protect the components of the pressure sensor 100, further ensuring the normal operation of the pressure sensor 100, and improving the structural stability and reliability of the pressure sensor 100.

Further, as shown in FIG. 3 and FIG. 4, in an embodiment of the present application, the outer peripheral side of the sensing element 10 is provided with an abutting edge 14, which is arranged between the sensing plane 13 and the pressure inlet port 12, and the surface of the abutting edge 14 away from the pressure inlet port 12 is provided with a first limiting protrusion 15. The surface of the abutting edge 14 away from the pressure inlet port 12 abuts against the end surface of the housing body 71, and the first limiting protrusion 15 abuts against the inner wall of the installation hole 713.

In this embodiment, the abutting edge 14 is provided between the sensing plane 13 and the pressure inlet port 12, such that the abutting edge 14 separates the sensing element 10 into two parts. When the sensing element 10 is assembled into the housing body 71, the part of the sensing element 10 provided with the sensing plane 13 can be inserted into the storage space 711 through the installation hole 713, and the housing body 71 can cover and protect the sensing plane 13 and the strain structure 30. When the part of the sensing element 10 provided with the sensing plane 13 completely enters the storage space 711, the end surface of the housing body 71 provided with the installation hole 713 can abut against the surface of the abutting edge 14 away from the pressure inlet port 12, and the first limiting protrusion 15 protruding on the surface of the abutting edge 14 enters the installation hole 713 and abuts against the inner wall of the installation hole 713 to limit the position. The installation limit of the sensing element 10 on the housing body 71 is realized, so that the part of the sensing element 10 provided with the pressure inlet port 12 can be exposed on one end of the housing body 71, which is convenient for users to install the pressure measuring part of the hydraulic brake system by plugging the brake flow pipe into the outer peripheral surface of the part of the sensing element 10 provided with the pressure inlet port 12, further improving the convenience of disassembly and assembly of the pressure sensor 100.

The first limiting protrusion 15 and the inner wall of the installation hole 713 may be provided with corresponding snap-fit mounting structures that cooperate with each other; or a threaded hole that penetrates to the inner wall of the installation hole 713 may be provided on the outer peripheral side of the housing body 71 corresponding to the installation hole 713, and the threaded hole is threadedly connected with a fastening bolt, and one end of the fastening bolt is abutted against the inner wall of the installation hole 713 to limit the outer peripheral side of the sensing element 10 and fix the sensing element 10. Furthermore, the sensing element 10 can be stably connected to the housing body 71 by snap-fit fixation or bolt fixation, thereby preventing the sensing element 10 from being separated from the housing body 71 during transportation or use, and further improving the structural stability and reliability of the pressure sensor 100. A sealing groove may be provided in the portion of the sensing element 10 where the pressure inlet port 12 is provided. The sealing groove is provided on the outer peripheral side of the sensing element 10. The sealing groove allows the brake fluid pipeline of the hydraulic brake system to be plugged into the sensing element 10 by wrapping the pipeline with a binding piece and clamping it in the sealing groove to achieve a sealed connection of the pipeline, thereby further improving the connection reliability and stability between the pressure sensor 100 and the hydraulic brake system.

Further, as shown in FIG. 2 and FIG. 3, in an embodiment of the present application, the support frame 73 includes a support ring 731 and a fixing frame 733. The support ring 731 is connected to the housing body 71 and abutted against an inner wall of the housing body 71, and the support ring 731 surrounds a portion of the sensing element 10 arranged in the storage space 711. The fixing frame 733 is connected to the support ring 731, and the integrated circuit unit 50 is installed at one side of the fixing frame 733.

In this embodiment, the support frame 73 may include a support ring 731 and a fixing frame 733. At this time, the outer diameter of the support ring 731 may be slightly equal to the inner diameter of the storage space 711, so that the support ring 731 can be fixedly abutted against the inner wall of the storage space 711. By surrounding the sensing element 10 and inserting it in the storage space 711, the support ring 731 can support the housing body 71, which is conducive to better avoiding the housing body 71 from being depressed by external forces and abutting against the strain structure 30, reducing the detection error of the strain structure 30, further ensuring the structural stability and reliability of the pressure sensor 100, and making the detection of the pressure sensor 100 more accurate and reliable. A support column or a fixed slot structure for embedding the integrated circuit unit 50 can be provided on the fixing frame 733, and the integrated circuit unit 50 can be fixed on the support column by screws or the integrated circuit unit 50 can be fixed by the fixed slot structure to achieve a stable connection between the integrated circuit unit 50 and the support frame 73, further improving the structural stability and reliability of the pressure sensor 100.

As shown in FIG. 2 to FIG. 4, in an embodiment of the present application, the portion of the sensing element 10 disposed in the storage space 711 is further provided with a second limiting protrusion 16, the second limiting protrusion 16 is disposed on the outer peripheral side of the sensing element 10 and abuts against the inner wall of the support ring 731. And/or, the support ring 731 and the fixing frame 733 are an integrated structure.

In this embodiment, the second limiting protrusion 16 is provided on the outer peripheral side of the portion of the sensing element 10 inserted into the accommodating groove, and the second limiting protrusion 16 can abut against the inner wall of the support ring 731 for limiting the position, which is beneficial for fixing the sensing element 10 and the support frame 73 by utilizing the interaction between the sensing element 10 and the support frame 73, and preventing the sensing element 10 and the support frame 73 from being offset from each other due to external force during transportation or use of the pressure sensor 100, further ensuring the normal operation of the pressure sensor 100 and improving the structural stability and reliability of the pressure sensor 100. A buckle structure may also be provided between the second limiting protrusion 16 and the inner wall of the support ring 731, so that the sensing element 10 and the support ring 731 can be mutually engaged and limited by the buckle structure, further improving the connection stability and reliability between the sensing element 10 and the support frame 73.

The support ring 731 and the fixing frame 733 may be integrally cast or integrally die-cast by a specific mold, so that the support ring 731 and the fixing frame 733 may form an integral manufacturing structure, which is conducive to better improving the overall structural strength of the support frame 73, further improving the structural stability and reliability of the support frame 73, and enabling the support frame 73 to more firmly fix the integrated circuit unit 50 and the sensing element 10 in the storage space 711.

As shown in FIG. 2 and FIG. 3, in an embodiment of the present application, the connection terminal 75 includes a terminal base 751 and a terminal body 753. The terminal base 751 is provided in the storage space 711, a first plug-in slot 7511 is provided at one end of the terminal base 751, a second plug-in slot 7513 is provided at another end of the terminal base 751, and an inner side wall of the first plug-in slot 7511 is communicated with an inner side wall of the second plug-in slot 7513. One end of the terminal body 753 is plugged into the second plug-in slot 7513, and another end of the terminal body 753 is exposed at the end of the housing body 71 away from the installation hole 713. An end of the integrated circuit unit 50 away from the sensing element 10 is plugged into the first plug-in slot 7511, and a portion of the integrated circuit unit 50 arranged in the first plug-in slot 7511 is provided with a connection contact, and the connection contact is electrically abutted against the terminal body 753.

In this embodiment, the first plug-in slot 7511 and the second plug-in slot 7513 are respectively provided at opposite ends of the terminal base 751, and the inner side walls of the first plug-in slot 7511 and the second plug-in slot 7513 are interconnected, so that the terminal base 751 can better fix the integrated circuit unit 50 and the terminal body 753. By inserting the end of the integrated circuit unit 50 away from the sensing element 10 into the first plug-in slot 7511, the connection contact of the integrated circuit unit 50 for outputting electrical signals is exposed at the position where the first plug-in slot 7511 and the second plug-in slot 7513 are connected to each other. By inserting the terminal body 753 into the second plug-in slot 7513, and then making the terminal body 753 and the connection contact of the integrated circuit unit 50 contact each other to achieve electrical conduction, so that by exposing the other end of the terminal body 753 on the other end of the housing body 71 away from the installation hole 713, the sensing signal output of the pressure sensor 100 can be realized by connecting the terminal body 753 with the control unit of the hydraulic brake system, ensuring the normal operation of the hydraulic brake system, and further improving the practicality and reliability of the pressure sensor 100.

The end of the support frame 73 away from the sensing element 10 can also be abutted against or fixed to the terminal base 751. The interaction between the support frame 73 and the terminal base 751 can be utilized to achieve mutual fixation of the two in the housing body 71, which is beneficial to better prevent the pressure sensor 100 from being affected by external forces during transportation or use, causing the support frame 73 and the terminal base 751 to shift in the storage space 711, affecting the mutual connection among the sensing element 10, the integrated circuit unit 50 and the terminal body 753, and further improving the structural stability and reliability of the pressure sensor 100.

As shown in FIG. 2 and FIG. 3, in an embodiment of the present application, the end of the housing body 71 away from the installation hole 713 is provided with a fixing hole 715 connected to the storage space 711, and the inner wall of the fixing hole 715 is provided with a limiting flange 7151. The connection terminal 75 is also provided with a terminal cover 755, which is connected to the terminal base 751 and penetrates the fixing hole 715, and the surface of the terminal cover 755 away from the terminal base 751 abuts against the limiting flange 7151, and the terminal cover 755 is provided with a limiting through hole 7551, and the other end of the terminal body 753 is penetrated through the limiting through hole 7551 and abuts against the inner wall of the limiting through hole 7551.

In this embodiment, a plug and socket structure or a buckle structure may be correspondingly arranged between the terminal cover 755 and the terminal base 751, so that the terminal cover 755 and the terminal base 751 can be connected and limited to each other, thereby preventing the terminal cover 755 and the terminal base 751 from moving relative to each other and causing the terminal body 753 to be offset, thereby affecting the electrical signal output of the pressure sensor 100. The fixing hole 715 on the terminal cover 755 can be a conical structure that is narrow at the top and wide at the bottom, and the terminal body 753 can adopt a corresponding structure that is narrow at the top and wide at the bottom, so that when the upper end of the terminal body 753 is passed through the limiting through hole 7551, it can be in a limiting abutment with the inner wall of the limiting through hole 7551 to prevent the terminal body 753 from detaching from the pressure sensor 100 through the limiting through hole 7551, thereby further improving the structural stability and reliability of the connection terminal 75. By setting a fixing hole 715 on the end face of the housing body 71 away from the sensing element 10, and setting a limiting flange 7151 on the inner wall of the fixing hole 715, a raised edge structure can be set on the portion of the terminal cover 755 that is inserted into the accommodating groove, and then the raised edge structure can abut and limit the limiting flange 7151 to prevent the terminal cover 755 from separating from the housing body 71, which is conducive to better ensuring that the terminal body 753 is stably exposed on the end face of the housing body 71 away from the installation hole 713, so that the terminal body 753 can be more stably and reliably contacted and connected with the control unit of the hydraulic brake system, thereby further improving the structural stability and reliability of the pressure sensor 100. A buckle structure can be provided between the raised edge structure and the limiting flange 7151, so that the two can be fixed by the buckle structure, further improving the connection stability and reliability between the connection terminal 75 and the housing body 71.

The terminal body 753 can also adopt a structure with certain conductivity and elasticity, such as a spring, conductive rubber, etc., so that under the limiting and fixing action of the terminal base 751 and the terminal cover 755, the terminal body 753 with certain elasticity can better maintain the connection between the two when connecting the control unit of the hydraulic brake system, further ensuring the electrical connection stability and reliability between the pressure sensor 100 and the hydraulic brake system, and improving the practicality and reliability of the pressure sensor 100.

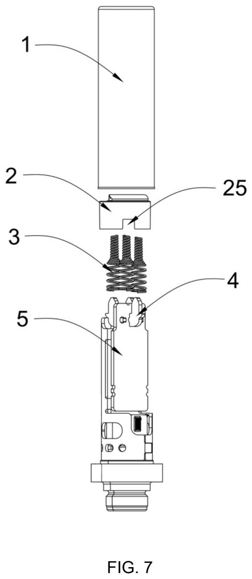

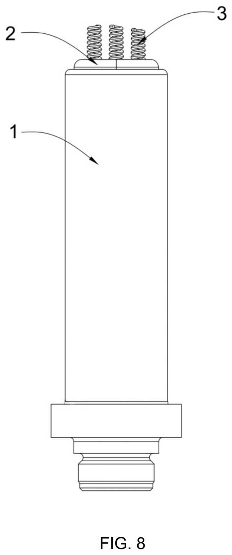

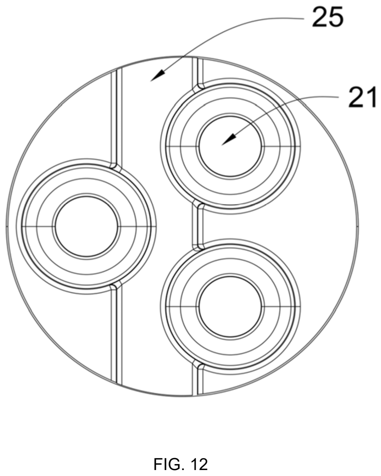

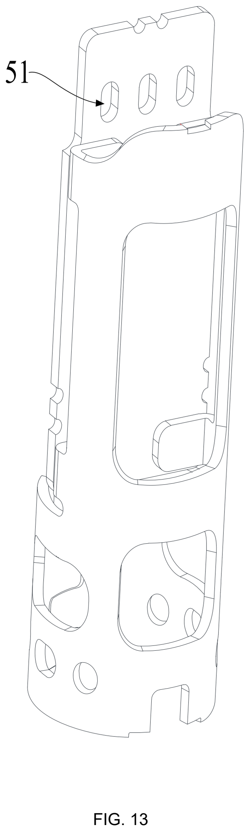

As shown in FIG. 7 to FIG. 13, the present application provides an electrical connection structure and a pressure sensor assembly, which use suitable conductive parts as extended contact points of a circuit board and combine them with axial pressing of a spring to achieve electrical connection between the circuit board and the spring.

As shown in FIG. 7 to FIG. 9, in an embodiment, the electrical connection structure includes a housing 1 having an inner cavity. The cover body 2 is provided at one end of the housing 1. The connection between the cover body 2 and the housing 1 can be achieved by using a crimping process.

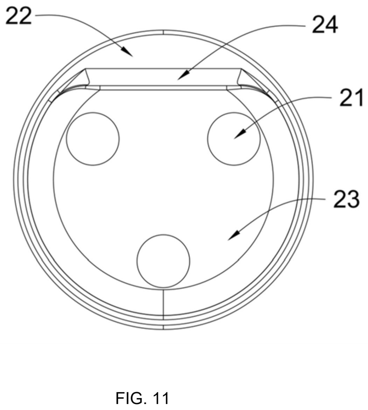

As shown in FIG. 11, in an embodiment, a first through hole 21 is provided in the cover body 2 of the electrical connection structure, and a first plane 22 and a second plane 23 are provided on the top of the cover body 2. The second plane 23 is located on one side of the first plane 22. An arc-shaped transition is formed between the first plane 22 and the second plane 23. A notch 24 is formed between the first plane 22 and the second plane 23. The first through hole 21 is located on the second plane 23, and the notch 24 has an anti-foolproof effect.

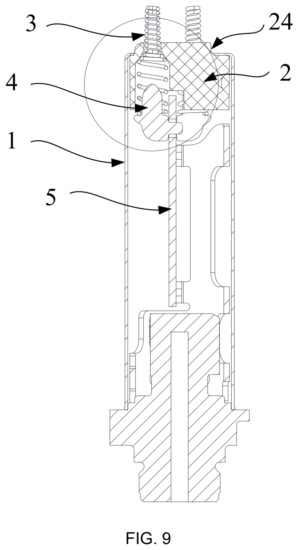

As shown in FIG. 7 and FIG. 9, in an embodiment, the electrical connection structure further includes a spring 3, the spring 3 is placed in the first through hole 21, one end of the spring 3 extends out of the top surface of the cover body 2, and the aperture of the first through hole 21 changes along the axial length of the first through hole 21. Correspondingly, the corresponding diameters of each coil in the spring 3 change along the axial length of the spring 3. The aperture of the first through hole 21 is larger than the outer diameter of the spring 3, and the outer diameter of the spring 3 and the aperture of the first through hole 21 are clearance-matched.

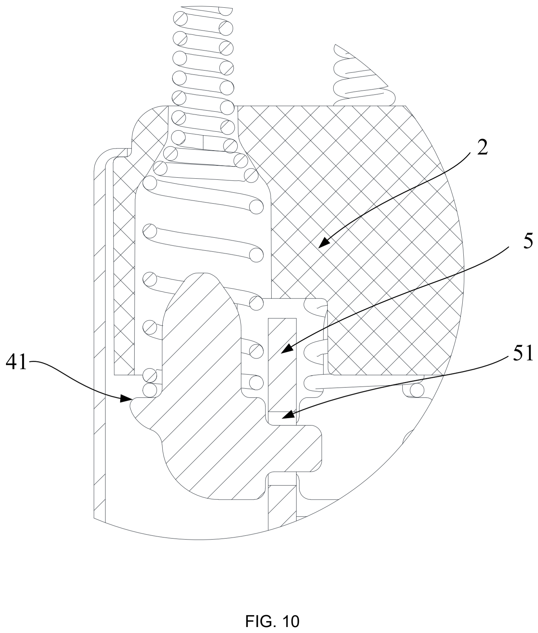

As shown in FIG. 9 and FIG. 10, in an embodiment, the electrical connection structure further includes a conductive terminal 4, one end of the conductive terminal 4 abuts against the other end of the spring 3, and a spring contact platform 41 is provided on the conductive terminal 4, and the bottom end of the spring 3 abuts against the spring contact platform 41. Furthermore, the conductive terminal 4 can be inserted into the inner circle of the spring 3 at one end close to the spring 3.

As shown in FIG. 9, FIG. 10, FIG. 12 and FIG. 13, in an embodiment, the electrical connection structure further includes a circuit board 5. A groove 25 is provided at the bottom of the cover body 2. The top of the circuit board 5 is arranged in the groove 25. A gap 9 is reserved between the top of the circuit board 5 and the wall of the groove 25. The groove 25 is in gap contact with the circuit board 5. A second through hole 51 is provided on the circuit board 5. One end of the conductive terminal 4 passes through the second through hole 51. The conductive terminal 4 is connected to the circuit board 5 at the second through hole 51.

The above are only some embodiments of the present application, and do not limit the scope of the present application thereto. Under the concept of the present application, equivalent structural transformations made according to the description and drawings of the present application, or direct/indirect application in other related technical fields are included in the scope of the present application.

## Claims

1. A pressure sensor, **characterized by** comprising:
a sensing element, wherein a pressure inlet channel is provided in the sensing element, one end of the sensing element is provided with a pressure inlet port communicated with the pressure inlet channel, and a sensing plane is provided on a periphery of the sensing element;
a strain structure, wherein the strain structure is provided on the sensing plane, the strain structure comprises a pressure measuring strain gauge and an encapsulation glass, the pressure measuring strain gauge is attached to the sensing plane, and the encapsulation glass is connected to the sensing element and configured to cover the pressure measuring strain gauge; and
an integrated circuit unit, wherein the integrated circuit unit is provided at one end of the sensing element away from the pressure inlet port and is electrically connected to the strain structure,
wherein the sensing element is an integrally manufactured structure, a wall thickness of the sensing element between the sensing plane and an inner surface of the pressure inlet channel is defined as W, and W is not less than 0.1 mm and not greater than 1.5 mm.

2. The pressure sensor according to claim 1, wherein a cross-sectional shape of the pressure inlet channel at the sensing plane is circular, square or elliptical.

3. The pressure sensor according to claim 1 or 2, wherein:
the pressure sensor is further provided with an installation housing, and a storage space is provided in the installation housing;
the integrated circuit unit is provided in the storage space and is arranged along an extension direction of the storage space;
the sensing element is connected to the installation housing and is at least partially provided in the storage space; and
one end of the sensing element provided with the pressure inlet port is exposed on one side of the installation housing.

4. The pressure sensor according to claim 3, wherein the installation housing comprises:
a housing body, wherein the storage space is formed in the housing body, one end of the housing body is provided with an installation hole communicated with the storage space, the sensing element is plugged into the installation hole, and a portion of the sensing element provided with the sensing plane is provided in the storage space through the installation hole;
a support frame, wherein the support frame is provided in the storage space and connected to the housing body, and the integrated circuit unit is installed at the support frame; and
a connection terminal, wherein the connection terminal is electrically connected to the integrated circuit unit and is partially exposed at one end of the housing body away from the installation hole.

5. The pressure sensor according to claim 4, wherein the support frame comprises:
a support ring, wherein the support ring is connected to the housing body and abutted against an inner wall of the housing body, and the support ring surrounds a portion of the sensing element arranged in the storage space; and
a fixing frame connected to the support ring, wherein the integrated circuit unit is installed at one side of the fixing frame.

6. The pressure sensor according to claim 4, wherein the connection terminal comprises:
a terminal base provided in the storage space, wherein a first plug-in slot is provided at one end of the terminal base, a second plug-in slot is provided at another end of the terminal base, and an inner side wall of the first plug-in slot is communicated with an inner side wall of the second plug-in slot; and
a terminal body, wherein one end of the terminal body is plugged into the second plug-in slot, and another end of the terminal body is exposed at the end of the housing body away from the installation hole,
wherein an end of the integrated circuit unit away from the sensing element is plugged into the first plug-in slot, and a portion of the integrated circuit unit arranged in the first plug-in slot is provided with a connection contact, and the connection contact is electrically abutted against the terminal body.

7. The pressure sensor according to claim 3, wherein the installation housing comprises:
a housing having an inner cavity;
a cover body provided at one end of the housing, wherein a first through hole is provided at the cover body;
a spring provided in the first through hole, wherein one end of the spring extends out of a top surface of the cover body;
a conductive terminal located in the inner cavity of the housing, wherein one end of the conductive terminal is abutted against another end of the spring; and
a circuit board located in the inner cavity of the housing, wherein one end of the circuit board is connected to another end of the conductive terminal.

8. The pressure sensor according to claim 7, wherein a top of the cover body is provided with a first plane and a second plane, the second plane is located on one side of the first plane, an arc-shaped transition is formed between the first plane and the second plane, a notch is formed between the first plane and the second plane, and the first through hole is located on the second plane.

9. The pressure sensor according to claim 7, wherein an aperture of the first through hole varies along an axial length of the first through hole, and the aperture of the first through hole is larger than an outer diameter of the spring.

10. The pressure sensor according to claim 7, wherein a bottom of the cover body is provided with a groove, a top of the circuit board is provided in the groove, a gap is provided between the top of the circuit board and a wall of the groove, a second through hole is provided on the circuit board, and another end of the conductive terminal is fixedly connected to the circuit board through the second through hole.

11. The pressure sensor according to claim 7, wherein a spring contact platform is provided on the conductive terminal, a bottom end of the spring is abutted against the spring contact platform, and the conductive terminal is inserted into an inner circle of the spring at one end close to the spring.

12. The pressure sensor according to claim 10, wherein a number of the first through hole, the spring, the second through hole, and the conductive terminal is multiple.
